# EUROPEAN PATENT SPECIFICATION

(11) **EP 1 216 588 B1**
(45) Date of publication and mention of the grant of the patent: **27.12.2006**
(21) Application number: 00965451.8
(22) Date of filing: 27.09.2000
(51) Int. Cl.: H04Q 7/34

(54) **METHOD AND SYSTEM FOR QUERYING ATTRIBUTES IN A CELLULAR COMMUNICATIONS SYSTEM**
VERFAHREN UND SYSTEM ZUM ABFRAGEN VON MERKMALEN IN EINEM ZELLULAREN KOMMUNIKATIONSSYSTEM
PROCEDE ET SYSTEME SERVANT A DEMANDER DES ATTRIBUTS DANS UN SYSTEME DE COMMUNICATION CELLULAIRE

(30) Priority: 27.09.1999 US 406452; 03.11.1999 US 163327 P; 07.01.2000 US 480710
(43) Date of publication of application: 26.06.2002
(73) Proprietor: QUALCOMM INCORPORATED, San Diego, CA 92121-1714 (US)
(72) Inventor: BENDER, Paul, E., San Diego, CA 92122 (US)
(74) Representative: Wagner, Karl H.
(86) International application number: PCT/US2000/026429
(87) International publication number: WO 2001/024557

(56) References cited:
- US-A- 5 625 876
- US-A- 5 892 916

## Description

### BACKGROUND OF THE INVENTION

### I. Field of the Invention

The present invention relates to wireless network communications. More specifically, the present invention relates to a novel and improved protocol by which wireless network elements can communicate.

### II. Background

In communications networks many functions performed by individual network elements require knowledge of information from surrounding network elements. Although other techniques such as propagating required information individually to each network element from a central control element are known, the present invention has significant advantages over these other techniques. Attempting to propagate information from a central control element to multiple network elements is time consuming and error prone. In addition, some attributes (such as resource availability) change frequently.

In a CDMA communications system, many functions performed by the network elements require information from surrounding network elements. In the present invention, the protocol is described in terms of information propagation between network elements comprising Modem Pool Transceivers and Modem Pool Controllers (MPCs). A Modem Pool Transceiver (MPT) is a communications network element which performs modulation and demodulation of radio frequency network traffic, and is also responsible for scheduling, power control, and overhead message handling tasks. An MPC is another element which provides radio control and signaling services to the MPT elements that include power control synchronization, maintaining modem session state, and network connection control. MPCs generate and process data for the MPTs to transmit and receive. MPTs need air interface attributes of neighboring MPTs in order to construct the correct air interface overhead messages. MPCs need air interface attributes of MPTs in order to perform MPT handoff. MPCs need air interface attributes of MPTs in order to perform Access Terminal paging. An Access Terminal (AT) is a device with a modem and a data interface that allows the user to access an IP network through an Access Network (AN). MPCs need resource availability attributes of surrounding MPCs in order to perform MPC handoff.

Presently, there is no ideal method for satisfying the needs of wireless communications network elements to directly exchange information.

One problem that arises when network elements cannot directly exchange information is that MPCs do not have an expedient method for discovering information about surrounding MPTs necessary to perform AT Paging. At any given time, an MPC may be responsible for paging one or more dormant ATs.

"Dormant" refers to the period of time when an AT and an AN have an established session, but do not have an established connection. Dormant mode allows the AT to maintain the "always on" state while using only limited radio link capacity and limited AT power when sending or receiving data.

In order to deliver data to a dormant AT, the MPC must be able to locate the AT. The MPC locates the dormant AT by paging the dormant AT in all the MPTs in which the dormant AT might be located. This collection of MPTs is referred to as the paging area. In order to page the dormant AT, the MPC must know the paging area.

Currently, there is no ideal method for satisfying the needs of MPCs to dynamically discover paging area information needed for AT Paging.

Further attention is drawn to the document US-A-5,892,916, which discloses a system and method for network management, including a message handling process, having a network manager and at least one network element is described. The network management messaging system sends and receives multiple concurrent messages between the network element layer and the network management layer. Support of concurrent messaging speeds and simplifies network management. A client request is received at a first managed object, at least part of the client request is fulfilled by a second managed object. A major row is created in response to receiving the client request, and a minor row associated with a managed object request sent to the second managed object. The minor row has an index that associates the minor row with the major row, and correlates a response to the managed object request with the client request.

In accordance with the present invention a method and apparatus for determining cellular paging areas, as set forth in claims 1 and 4, are provided. Preferred embodiments of the invention are claimed in the dependent claims.

### SUMMARY OF THE INVENTION

The present invention is a novel and improved protocol for directly updating attribute information in communications networks.

The present invention provides a generic protocol based on the HyperText Transfer Protocol version 1.1 (HTTP/1.1) and Multipurpose Internet Mail Extensions (MIME), which allows individual network elements to query other network elements directly for information without network manager intervention. It greatly reduces system failures caused by propagation errors and stale information, as well as, facilitating additional network element deployment and network element removal.

The network elements make their attributes available through the use of HTTP/1.1. Other network elements are able to query for specific attributes using the HTTP GET method. The response is a return HTTP header with a MIME part body containing a list of the attribute name/value pairs.

The present invention provides a generic protocol for allowing communication network elements to query other network elements for information. It allows network information to be configured in one location and queried dynamically by other locations. It prevents propagation errors and outdated information errors introduced by propagating required information individually to each network element through network management interfaces by a centralized network manager.

Embodiments of the present invention also meet paging information discovery needs by providing a protocol for allowing an MPC to dynamically query information needed for AT Paging from MPTs. The present invention provides a method for determining cellular paging areas of a wireless communication network by exchanging network configuration information directly between network elements, and determining access terminal paging areas from the exchanged network configuration information.

### BRIEF DESCRIPTION OF THE DRAWINGS

The features and advantages of the present invention will become more apparent from the detailed description set forth below when taken in conjunction with the drawings in which like reference characters correspond throughout and wherein:
FIG. 1 is a functional block diagram of an exemplary embodiment of the present invention corresponding to a traditional, or distributed MPT, wireless communications network topography;
FIG. 2A illustrates a distributed NAS wireless communications network topography;
FIG. 2B illustrates a distributed MPC wireless communications network topography;
FIG. 3 is a flowchart illustrating the system parameter update mechanism of the present invention;
FIG. 4 is a diagram of an exemplary embodiment of the contents of machine requests and machine responses of the present invention;
FIG. 5 is a data structure diagram illustrating the data hierarchy of the present invention;
FIG. 6 is an intermediate level flowchart presenting an overview of the system parameter update mechanism;
FIG. 7 is a flowchart illustrating the location update procedure of the present invention;
FIG. 8 is a flowchart illustrating the antenna attribute update procedure of the present invention;
FIG. 9 is a flowchart illustrating the MPT neighbor update procedure of the present invention;
FIG.10 is a flowchart illustrating the MPC update procedure of the present invention;
FIG. 11 is a block diagram illustrating the apparatus used to perform the attribute querying operation of the present invention;
FIG. 12 is a flowchart illustrating the information caching method of the present invention;
FIG. 13 is a block diagram illustrating the apparatus used to perform Paging Information Discovery in a wireless communications system;
FIG. 14 is an AT Paging Area Diagram;
FIG. 15 is a high level diagram of a method used to perform Paging Information Discovery in a wireless communications system;
FIG. 16 is a data structure diagram illustrating the data hierarchy of paging information discovery attributes of an embodiment of the present invention; and
FIG. 17 is a block diagram illustrating a paging area determination method.

### DETAILED DESCRIPTION OF THE PREFERRED EMBODIMENTS

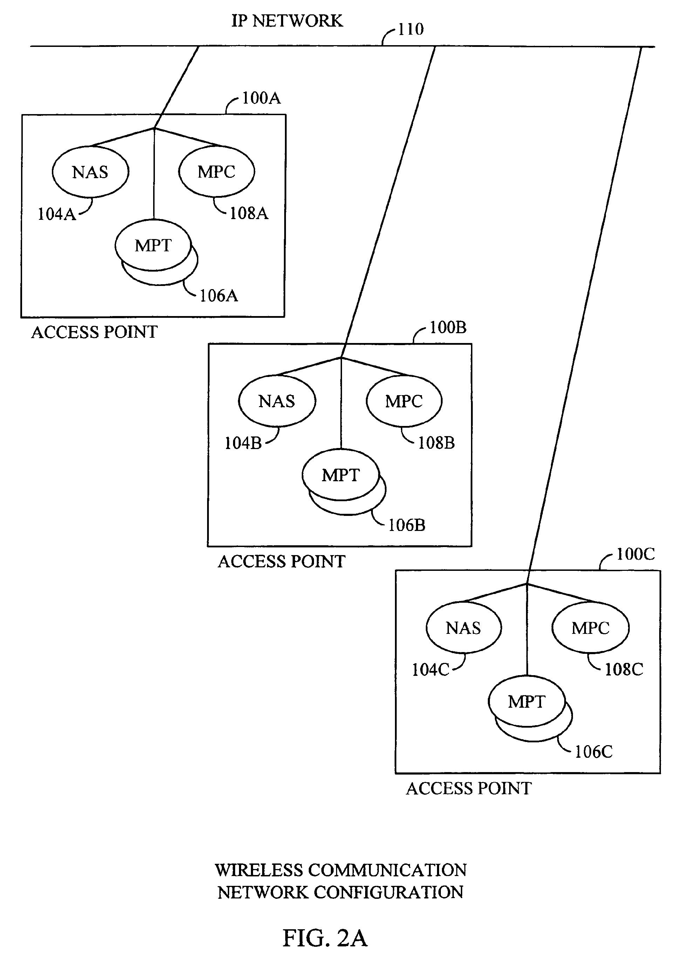

An exemplary telecommunications network system in which the present invention is embodied is illustrated in FIG. 2A. FIG 2A illustrates wireless communications network access points **100A, 100B, 100C** connected over an Internet Protocol (IP) Network **110**. Access points **100A, 100B, 100C** provide wireless service to subscribers in predefined geographic areas. Sometimes, an access point **100A, 100B, 100C** partitions and independently services portions of the geographic coverage area referred to as sectors. Sectorization of an access point is well known in the art and described in detail in U.S. Patent No. 5,625,876 entitled "METHOD AND APPARATUS FOR PERFORMING HANDOFF BETWEEN SECTORS OF A COMMON BASE STATION", which is assigned to the assignee of the present invention and incorporated by reference herein. The MPTs **106** covering the same or RF close areas are referred to as the neighbors of an access point. In wireless communication systems, the MPTs **106** for which given MPTs **106** and MPCs **108** require information is determined by the RF propagation characteristics of the signals transmitted by the network access points. In the exemplary embodiment, access point **100A, 100B, 100C** is a topological element of a communications X network comprised by a single hardware platform that contains one or more MPTs (MPT) **106**, one MPC **108**, and one Network Access Server (NAS) **104**. Network Access Server **104** is a device which provides access to services on that network in a controlled fashion, based on the identity of the user of the network services in question and on the policy of the provider of these services. The NAS **104** performs traditional network access server protocol functionality such as defined by Point-to-Point Protocol (PPP) suite, Remote Authentication Dial-In User Server (RADIUS) protocol suite, and the Layer Two Tunneling Protocol (L2TP) suite. MPT **106** contains a bank of traffic channel modems and is responsible for generating the transmitted waveform, and for receiving transmissions from subscribers in the coverage area of an MPT **106**. MPT **106** generates and receives waveforms by modulation and demodulation of radio frequency network traffic, and also performs scheduling, power control, and system parameter message handling tasks. MPC **108** is a network element which generates and processes data for the MPTs to transmit and receive. MPCs **108** also provide radio control and signaling services to the MPTs **106** elements such as power control synchronization, maintaining modem session state, and network connection control.

There are two topological Access Network reference models in addition to the traditional wireless network configuration: the distributed MPC; and the distributed NAS.

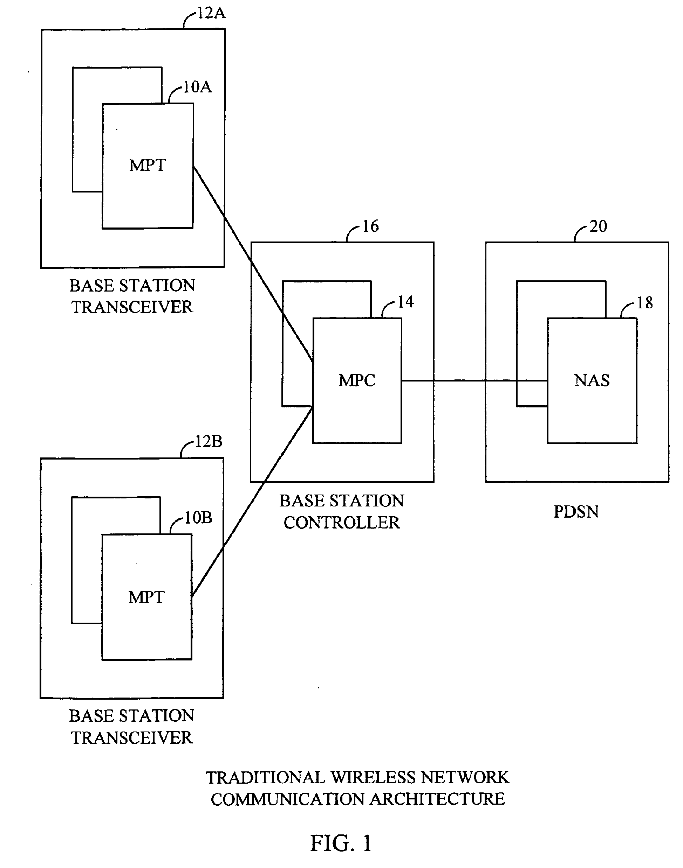

FIG.1 is a functional block diagram of an exemplary embodiment of the present invention corresponding to a traditional or distributed MPT **10**, wherein wireless communications network topography MPCs **14** are centralized at a point traditionally identified as a Base Station Controller (BSC) **16**. NAS **18** functionality is located at a point sometimes known as a Packet Data Servicing Node (PDSN) **20**. FIG 1 shows a distributed MPT Access Network where the MPTs **10** are distributed and the MPCs **14** and NAS **18** are centralized. A distributed MPT Access Point is formed by grouping together one or more co-located MPTs. The Access Network is formed by connecting one or more distributed MPT Access Points, one or more centralized MPCs and one or more centralized Network Access Servers.

FIG. 2A illustrates a distributed NAS wireless communications network topography. In a distributed NAS Access Network, the MPT **106**, MPC **108** and NAS **104** are distributed. FIG. 2A shows Access Points **100A, 100B, 100C** formed by grouping together one or more MPTs, one or more MPCs, and one or more Network Access Servers. The Access Network is formed by connecting one or more distributed Access Points.Access.

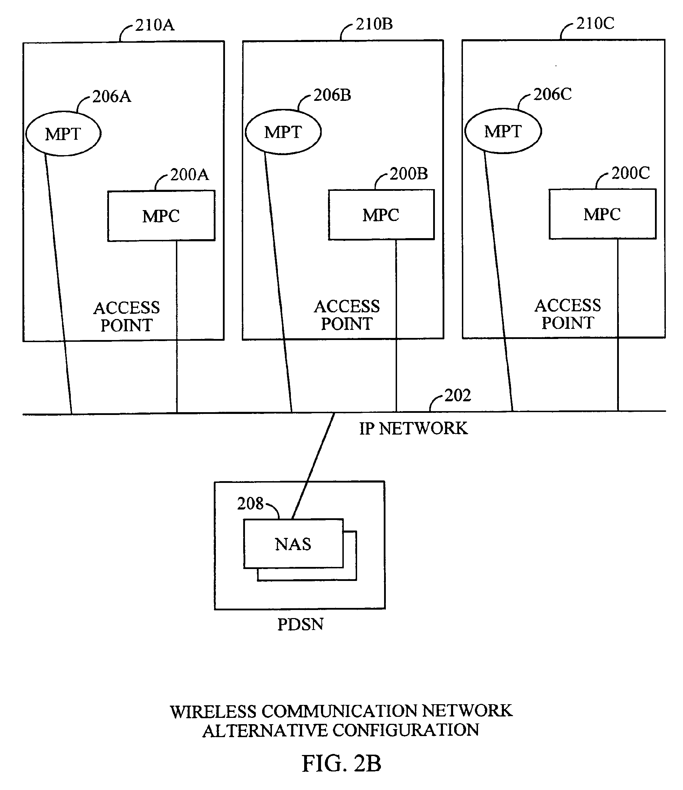

FIG 2B illustrates a distributed MPC wireless communications network topography. In a distributed MPC Access Network, the MPT **206** and MPC **200** are distributed and the NAS **208** is centralized. An Access Point is formed by grouping together one or more MPTs and one or more MPCs. The Access Network is formed by connecting one or more distributed Access Points and one or more centralized Network Access Servers. Again, access point components communicate directly with each other over IP Network **202** using the present invention. In a distributed MPC Access Network, the MPT and MPC are distributed and the NAS is centralized.

In CDMA communications networks, operational and network management parameters must be known in multiple places throughout the system. Although the present invention is described in the context of CDMA communications networks, one skilled in the art will understand that the teachings of the present invention are readily extended to other wireless communication systems such as GSM and AMPS communication networks. These parameters include information contained in operational messages such as Handoff Direction messages, Power Control Parameters messages, Page messages and Neighbor List messages. The contents of these messages is well known in the art and described in detail in Telecommunications Industry Association family of standards IS-95 entitled "MOBILE STATION-BASE STATION COMPATIBILITY STANDARD FOR DUAL-MODE WIDEBAND SPREAD SPECTRUM CELLULAR SYSTEM". These messages are described for illustrative purposes. It will be understood by one skilled in the art that teachings can be extended to other messages necessary to the operation of a wireless communication system. Network configuration parameters must also be known and kept updated in multiple locations. For example, if an MPT **106** is brought on line, brought offline or fails temporarily, other MPTs **106** and MPCs **108** in the system must be informed of the change in resources. The present invention is an improvement over previously known techniques for updating parameters such as propagating required information through the network management interface individually to each network element from a central network manager. Previously known methods require central manager intervention and introduce propagation errors which cause system failures.

The present invention allows wireless CDMA network information propagation to resemble Internet information propagation by dispensing with a centralized manager. The Internet does not have a central manager at the top of the Internet pushing new information down to each router on the Internet each time a router is added to or removed from the Internet. Internet routers know their neighboring routers by address configuration and can query information about them directly by wireline connection. The present invention allows MPT **106** elements to query information about its neighbors by being provided with a list of the Fully Qualified Domain Names (FQDN) of neighboring MPTs **106** and providing a protocol to directly communicate with elements of any other sector without wireline connections. MPCs **108** contain lists of MPTs **106** to which they provide service. Thus, the present invention eliminates the need to propagate redundant information through the network management interface individually to each network element from a central location. The present invention allows MPT **106** and MPC **108** network elements to be added to and removed from a wireless communications network in much the same way a router is added to or removed from the Internet.

The present invention provides a protocol for allowing network entities to retrieve information from a single network entity where the information is most easily configured. The protocol is a simple and flexible method for discovering information and knowing for how long the information is valid. The present invention allows the attributes in one location to propagate directly to other locations where they are needed. Additionally, because most information changes infrequently, the protocol only returns queried information if the information has changed since the last such query.

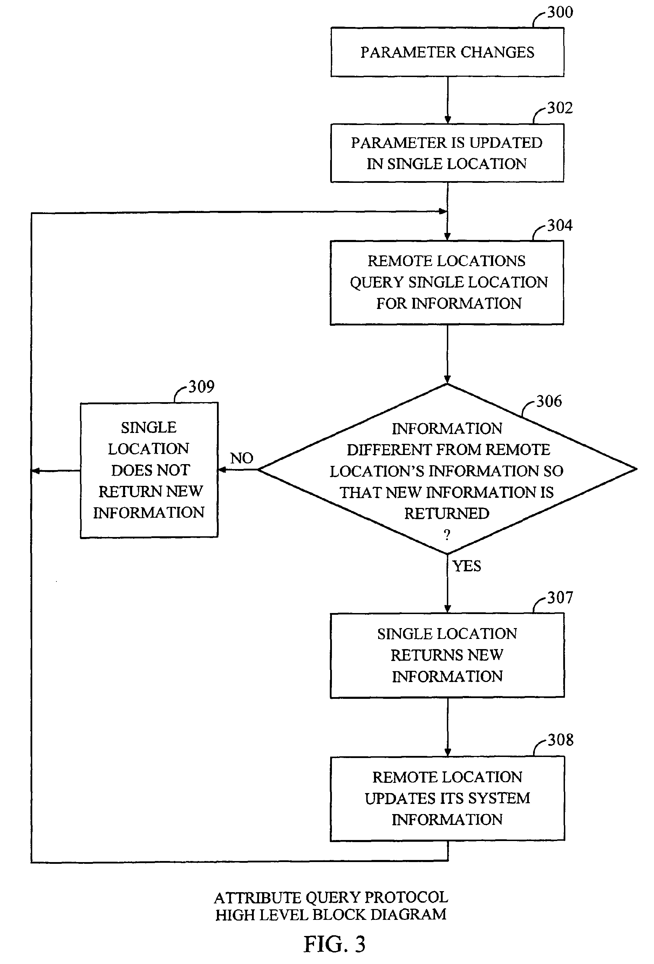

FIG 3 illustrates a high level block diagram of the information querying process. In block **300**, a parameter of a network element is changed. In block **302**, a parameter list contained in the network element is updated to indicate the change. In block **304**, a remote network element requests the information in the list. In block **306**, the network element containing the list determines if the list has been updated since the last query from the requesting element. If the list has been updated since the last query, the updated list is sent to the querying device in block **307** in response to the request. If, in block **306**, the network element containing the list determines that no change has occurred, in block **309** the list is not sent, as the requesting element already has this list. If the list has been sent in block **307**, in block **308**, the remote network element updates its parameter list accordingly.

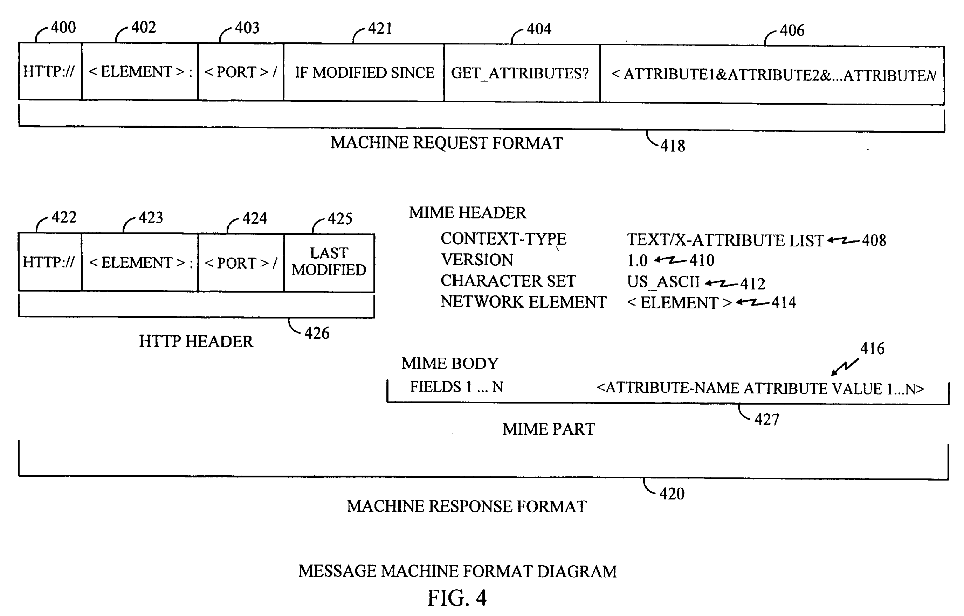

Figure 4 illustrates the machine interfaces employed in block **304** to query information from remote locations and in block **308** to sent updated information. In the exemplary embodiment, network elements request attribute information through the use of the HyperText Transfer Protocol (HTTP) GET message **418.** The elements receive information in an HTTP response **420** which contains HTTP header fields **426** and a Multipurpose Internet Mail Extensions (MIME) part **427.** The MIME part **427** is comprised of a MIME header **408-414** and a body containing a list of the requested attribute name/value pairs **416.**

To be consistent with the HTTP terminology, the network element using the HTTP GET **418** method to request the attributes will be referred to as the client, and the network element providing the response HTTP header **426** and requested attributes **416** in a MIME part response **427** will be referred to as the server. The exemplary embodiment of the present invention employs the formats described in HTTP version 1.1 and MIME version 1.0. The remote clients may now query the updated information from the server location **304**.

The client requests the desired attribute values using the HTTP GET method with the attribute names included in the query field of the absolute Universal Resource Identifier's (URI). In the exemplary embodiment, the URL **418** has the partial form;
"http://<element>:<port>/get_attributes?<attributes>"
wherein element **402** is the Fully Qualified Domain Name of the serving element, port **403** is the port number of the protocol **404**, and attributes **406** are the desired attributes separated by "&". The HTTP request header may also contain optional fields described in RFC 2068. The present invention always conditions requests on the optional If Modified Since field **421**. The client uses the If Modified Since field **421** to inform the server of when it last updated the information.

The server uses the If Modified Since **421** field of the request **418** to determine if updated information should be sent. If the server has not updated the information since the time specified in the If Modified Since field, the server returns an abbreviated response **420** to the client, containing only HTTP header **426** fields with no MIME part **427** response.

If requested information has been updated since the time specified in the If Modified Since field, thus meeting the If Modified Since **418** condition of the request, the server responds with an HTTP header **426** and a MIME part **427** containing a list of attribute name/value pairs **416** for the requested attributes. The server silently discards any unrecognized attributes. The server includes the Last-Modified field **425** in the response header **426**. The server sets the value of the Last-Modified field **425** to the modification time and date of the most recently modified attribute in the response.

The response to the attribute query is carried in version 1.0 of the experimental MIME subtype **408** text/x-attribute-list. This MIME subtype is indicated by the Context-Type field **408.** The version parameter **410** indicates the version of the x-attribute-list **408** format. The current value of the version parameter **410** is 1.0. The charset parameter **412** indicates the character set used. In the exemplary embodiment, the only valid value for the character set parameter is "US-ASCII". The <element> parameter **414** indicates the network element type of the server. For example, "modem-pool-transceiver" and "modem-pool-controller" indicate the server is a communications network MPT and a communications network MPC. The body **416** of the MIME part contains zero or more fields. Each field contains the name and value for one attribute.

Some attribute fields **416** are most easily expressed as elements of an array. This MIME part format **427** adopts a uniform method for expressing an array as a set of fields **416**. A multi-dimensional array is treated as an array of arrays. Array elements are indexed from 0 using integers. For an attribute array with the attribute-name "X", the number of elements in the attribute array is represented by the attribute-name "X#". For an attribute array with the attribute-name "X", element K of in the attribute array is represented by the attribute-name "X[K]".

If the request contains the attribute name for an attribute array, then the response **420** contains the number of elements in the array and each element in the array, with the number of elements in the array appearing before any of the elements in the array.

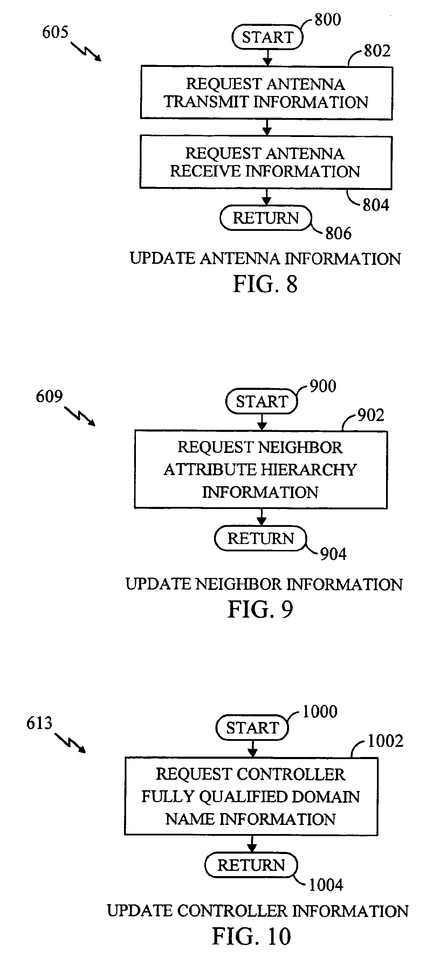

Some attributes, such as attributes representing characteristics of a MPT neighbor, are most easily expressed as part of a hierarchy. This MIME part format **427** adopts a uniform method for expressing an attribute in a hierarchy as a field. When an attribute within a hierarchy is converted to a field, it is converted to the attribute-name "Y.X", where "X" is the name of the attribute and Y is the attribute-name of the parent of the attribute. Examples of expressing arrays and hierarchies are described in FIG. 8 and FIG. 9.

Network elements make all of their attributes available through the query protocol of the present invention.

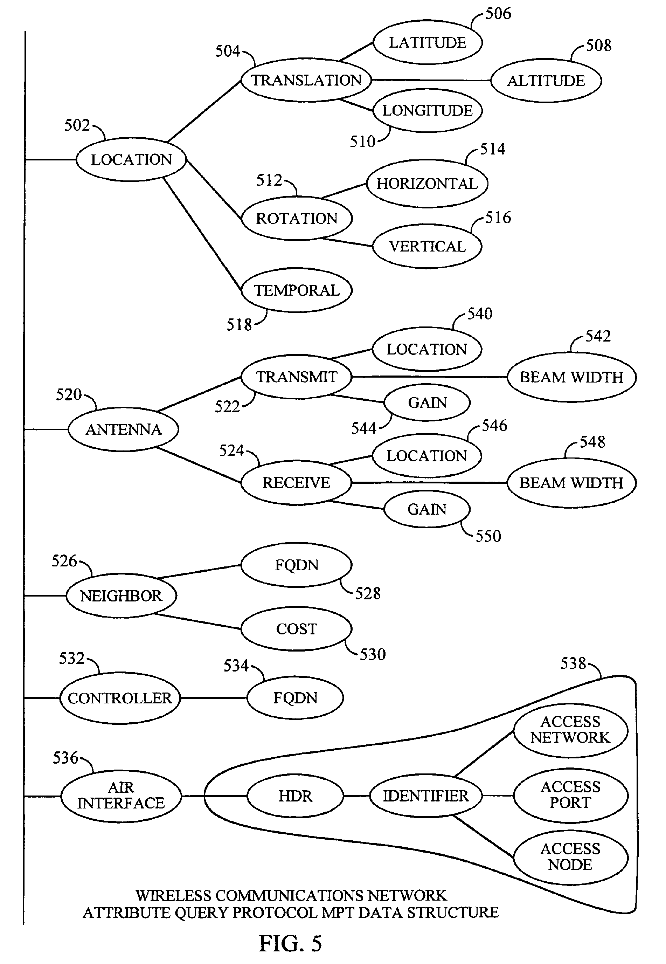

FIG. 5 is a data tree diagram of an exemplary embodiment of a partial data hierarchy of the present invention, illustrating the MPT data structure. It will be understood by one skilled in the art that the hierarchy is presented for illustrative purposes and does not include all attributes necessary. In addition, other structures may be employed and are within the scope of the presentation.

Location. **502** is the hierarchical root of all attributes that specify the MPT's location.

Translation **504** is the hierarchical root of all attributes that specify the MPT's location. Latitude **506** specifies the MPT's latitude. The latitude is expressed in degrees, minutes and seconds, with a positive number signifies the Northern Hemisphere. The latitude ranges from -90 degrees to +90 degrees. Longitude **510** specifies the MPT's longitude. The longitude is expressed in degrees, minutes and seconds, with a positive number signifying east longitude. The longitude ranges from -180 degrees to +180 degrees. Altitude **508** specifies the MPT's altitude. The altitude is expressed in meters, with a positive number indicating above sea level altitude.

Rotation **512** is the hierarchical root of all attributes that specify the MPT's orientation to the Earth. Horizontal **514** specifies the MPT's horizontal orientation relative to due east. The horizontal orientation is expressed in degrees, minutes and seconds, with a positive number signifying the Northern Hemisphere. Vertical **516** specifies the MPT's relative vertical orientation. The vertical orientation is expressed in degrees, minutes and seconds. The vertical orientation ranges from -90 degrees to +90 degrees.

Temporal **518** specifies the MPT's local time offset relative to Universal Coordinated Time (UTC). The local time offset is expressed in hours, minutes and seconds. The local time offset ranges from -12 hours to +12 hours.

Antenna **520** is the hierarchical root of all attributes that specify the characteristics of the MPT's antennas. Transmit **522** is an array of the hierarchical root of all attributes that specify the characteristics of the MPT's transmit antennas. Location **540** is the hierarchical root of all the attributes that specify the location of the transmit antenna relative to the location specified in Location **502**. Beamwidth **542** is the beam width of the transmit antenna. The beam width is expressed in degrees. The beam width ranges from 0 to 360 degrees. Gain **544** is the gain of the transmit antenna. The transmit antenna gain is expressed in decibels. The gain ranges from 0 to 100 decibels.

Receive **524** is an array of the hierarchical root of all attributes that specify the characteristics of the MPT's receive antennas. Location **546** is the hierarchical root of all the attributes that specify the location of the receive antenna relative to the location specified in Location **502**. Beamwidth **548** is the beam width of the receive antenna. The beam width is expressed in degrees. The beam width ranges from 0 to 360 degrees. Gain **550** is the gain of the receive antenna. The receive antenna gain is expressed in decibels. The gain ranges from 0 to 100 decibels.

Neighbor **526** is an array of the hierarchical root of all attributes that specify characteristics of the MPT's neighbors. FQDN **528** contains the Fully Qualified Domain Name (FQDN) of the neighbor. Cost **530** contains the cost of using the neighbor. The lower the cost, the more likely an AT communicating with the MPT is to see this MPT neighbor. The cost is useful pruning neighbor lists that are too large.

Controller **532** is an array containing each of the MPCs from which the MPT receives service. FQDN **534** contains the Fully Qualified Domain Name of the controller.

Air Interface **536** is the hierarchical root of all of the wireless communications network's air interface attributes. The Air Interface **536** root is extensible to any air interface protocol. HDR **538** is an example of the extensibility of the Air Interface **536** hierarchical root. HDR is a proposed air interface for providing high rate digital data. The HDR air interface is described in detail in U.S. Patent Application serial No. 08963,386 entitled "METHOD AND APPARATUS FOR HIGHER RATE PACKET DATA TRANSMISSIONS", filed November 3, 1997, now U.S. Patent No. 6,574,211, issued June 3, 2003 to Padovani et al., assigned to the assignee of the present invention and incorporated by reference herein. Other potential air interface extensions may include but are not limited to GSM, IS-95, CDMA 2000, and WCDMA.

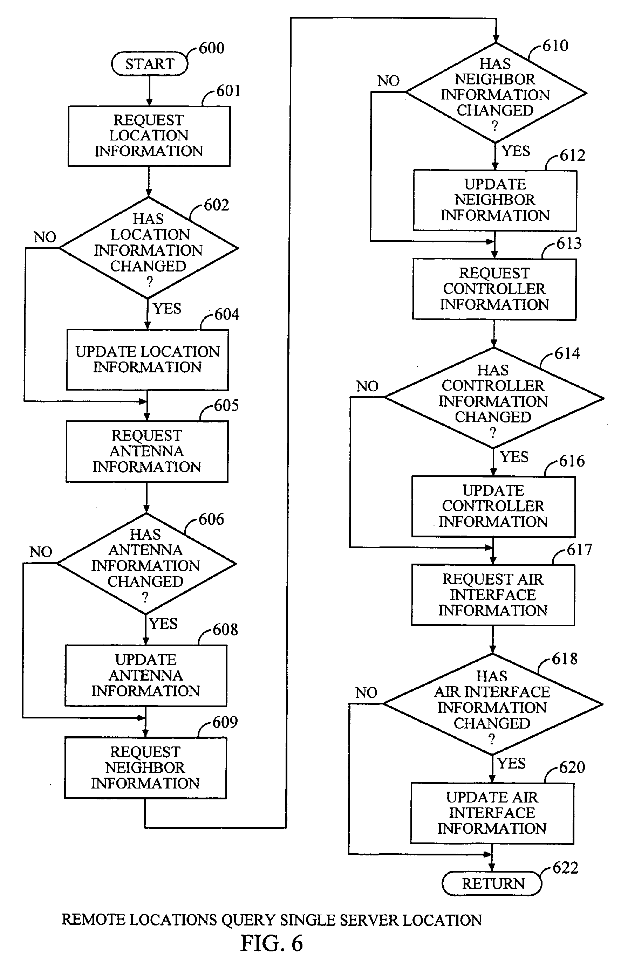

FIG. 6 is a flowchart of an exemplary embodiment of an intermediate level overview of the present invention's system parameter query and update mechanism. One skilled in the art will understand that ordering of steps illustrated in FIG. 6 is not limiting. Moreover, the requests for information will logically be integrated as will the responses, and it is contemplated that typically only a subset of the information will be integrated information the requests and responses. Typically, requests will be made in a compound request for complex collections of attributes, not serially for single attributes, as shown for simplicity. FIG. 6 is an overview of the information exchanged in the exemplary embodiment of the present invention. The information query process starts in block **600**, when a client desires to update information regarding a server. In the exemplary embodiment, the client is updating information regarding the attributes that specify the MPT characteristics of the server.

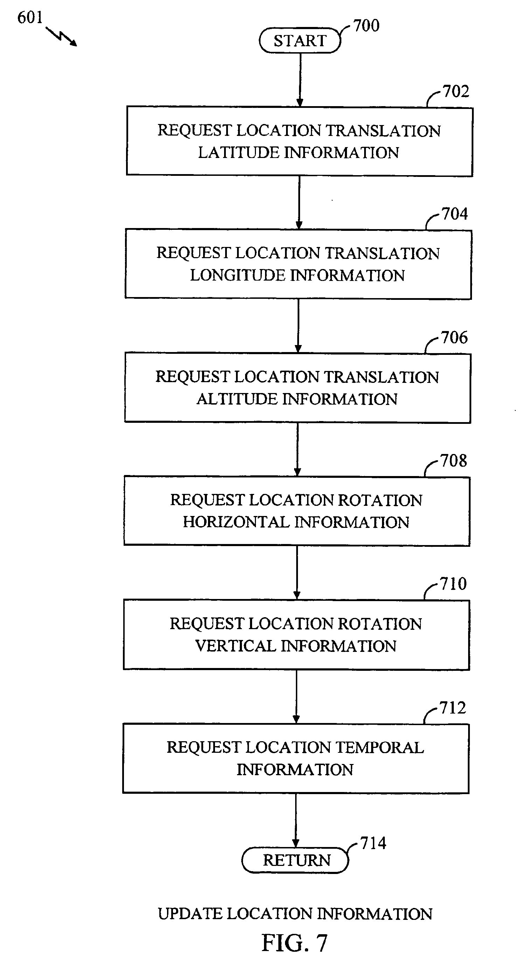

In block **601**, the client conditionally requests Location information **502**. A detailed flowchart of the Location attribute request method is provided in FIG. 7. In block **602**, the server determines if the requested Location information has changed in the server since the time specified in the If Modified Since field for this information from this client, as conditioned by the If Modified Since 4**21** field of the request 418; the server sends the new Location attribute information in block **604** and the process moves to block **605.** If the requested information has not changed, the server sends header fields **426,** but does not send a MIME part **427** with new Location attribute information, and the process moves directly to block **605**. If new attribute information has been sent in block **604** the client updates the Location attribute information accordingly.

In block **605**, the client conditionally requests Antenna information **520**. A detailed flowchart of the Antenna attribute request method is provided in FIG. 8. In block **606**, the server determines if the requested Antenna information has changed in the server since the time specified in the If Modified Since field for this information from this client, as conditioned by the If Modified Since **421** field of the request **418**; the server sends the new Antenna attribute information in block **608** and the process moves to block **609**. If the requested information has not changed, the server sends header fields **426**, but does not send a MIME part **427** with new antenna attribute information, and the process moves directly to block **609**. If new attribute information has been send in block **608**, the client updates the Antenna attribute information accordingly.

In block **609**, the client conditionally requests Neighbor information **526**. A detailed flowchart of the Neighbor attribute request method is provided in FIG. 9. In block **610**, the server determines if the requested Neighbor information has changed in the server since the time specified in the If Modified Since field for this information from this client, as conditioned by the If Modified Since **421** field of the request **418;** the server sends the new Neighbor attribute information in block **612;** and the process moves to block **613**. If the requested information has not changed, the server sends header fields **426**, but does not send a MIME part **427** with new Neighbor attribute information, and the process moves directly to block **613**. If new attribute information has been sent in block **612**, the client updates its Neighbor attribute information accordingly.

In block **613**, the client conditionally requests Controller information **532**. A detailed flowchart of the Controller attribute request method is provided in FIG. 10. In block **614,** the server determines if the requested Controller information has changed in the server since the time specified in the If Modified Since field for this information from this client, as conditioned by the If Modified Since **421** field of the request **418;** the server sends the new Controller attribute information in block **616;** and the process moves to block **617.** If the requested information has not changed, the server sends header fields **426,** but does not send a MIME part **427** with new Controller attribute information, and the process moves directly to block **617.** If new attribute information has been sent in block **616,** the client updates its Controller attribute information accordingly.

In block **617**, the client conditionally requests Air Interface information **536.** In block **618**, the server determines if the requested Air Interface information has changed in the server since the time specified in the If Modified Since field for this information from this client, as conditioned by the If Modified Since **421** field of the request **418;** the server sends the new Air Interface attribute information in block **620;** and the process moves to block **622.** If the requested information has not changed, the server sends header fields **426,** but does not send new Air Interface attribute information and the process moves directly to block **622**. If new attribute information has been sent in block **620,** the client updates its Air Interface attribute information accordingly.

FIG. 7 is a flowchart of an exemplary embodiment of the system parameter update method for the Location attributes **502** that specify the location of MPT type network elements. Location attribute **502** is the hierarchical root of all attributes that specify the MPT's location. FIG 7. provides a detailed flowchart of the Location attribute request **601**. MPT location information query process starts in block **700**, when a client desires to update location information of a neighboring MPT server on the wireless communications network.

In block **702**, the client requests latitude information. Translation attribute **504** is the hierarchical data structure root of all the attributes that describe an MPT's physical location on the earth. Latitude attribute **506** specifies the MPT's latitude expressed in degrees, minutes and seconds, with a positive number signifying the Northern Hemisphere. In block **702**, the client requests Latitude information **506** from, for example, the MPT 0000.mpt.an.net on protocol port 10 by issuing the following URI conditioned on the If Modified since **418** field:
"http://0000.mpt.an.net:10/get_attributes?Location.Translation.Latitude"
onto the network. The server responds with a header containing a Context-Type **408** of text/x-attribute-list, a version **410** of 1.0, a charset **412** value of us-ascii, and an element type **414** value of modem-pool-transceiver. If the requested latitude information has changed in the server since the time specified in the If Modified Since field for this information from this client, the server sends a Last Modified field and the new Latitude attribute information in the MIME part response **427** containing the name-attribute name-value field of a Location.Translation.Latitude value expressed as + I-dd.mm.ss.f. The latitude ranges from -90 degrees to +90 degrees.

In block **704**, the client requests location translation longitude information. The Longitude attribute **510** specifies the MPT's longitude expressed in degrees, minutes and seconds, with a positive number signifying east longitude. In block **704**, the client requests Longitude information **510** from the example MPT by issuing the following URI conditioned on the If Modified since **418** field:
"http://0000.mpt.an.net:10/get_attributes?Location?Translation.Longitude"
onto the network. The server responds with a header containing a Context-Type **408** of text/x-attribute-list, a version **410** of 1.0, a charset **412** value of us-ascii, and an element type **414** value of modem-pool-transceiver. If the requested longitude information has changed in the server since the time specified in the If Modified Since field for this information from this client, the server returns a Last Modified field and the new Longitude attribute information in the MIME part response **427** containing the name-attribute name-value field of a Location.Translation.Longitude value expressed as + l - dd.mm.ss.f. The longitude ranges from -180 degrees to +180 degrees.

In block **706**, the client requests location translation altitude information. Altitude attribute **508** specifies the MPT's altitude expressed in meters, with a positive number indicating above sea level altitude. In block **706**, the client requests Altitude information **508** from the example MPT by issuing the following URI conditioned on the If Modified since **418** field:
"http://0000.mpt.an.net:10/get_attributtes?Location.Translation.Altitude"
onto the network. The server responds with a header containing a Context-Type **408** of text/x-attribute-list, a version **410** of 1.0, a charset **412** value of US-ASCII, and an element type **414** value of modem-pool-transceiver. If the requested altitude information has changed in the server since the time specified in the If Modified Since field for this information from this client, the server returns a Last Modified field and the new Altitude attribute information in the MIME part response **427** containing the name-attribute name-value field of a Location.Translation.Altitude value expressed as + l -m.f.

In block **708**, the client requests horizontal orientation information. Rotation attribute **512** is the hierarchical data structure root of all the attributes that describe a MPT's orientation to the earth. Horizontal attribute **514** specifies the MPT's horizontal orientation relative to due east. The horizontal orientation is expressed in degrees, minutes and seconds, with a positive number signifying the Northern Hemisphere. In block **708**, the client requests Horizontal **514** information from the example MPT 0000.mpt.an.net on protocol port 10 by issuing the following URI conditioned on the If Modified since **418** field:
"http://0000.mpt.an.net:10/get_attributes?Location.Rotation.Horizontal"
onto the network. The server responds with a header containing a Context-Type **408** of text/x-attribute-list, a version **410** of 1.0, a charset **412** value of US-ASCII, and an element type **414** value of modem-pool-transceiver. If the requested horizontal orientation information has changed in the server since the time specified in the If Modified Since field for this information from this client, the server sends a Last Modified field and the new Horizontal attribute information **514** in the MIME part response **427** containing the name-attribute name-value field of a Location.Rotation.Horizontal value expressed as + I - dd.mm.ss.f.

The horizontal orientation ranges from -180 degrees to +180 degrees.
In block **710**, the client requests vertical orientation information. Vertical attribute **516** specifies the MPT's vertical orientation relative to a line drawn perpendicular from the center of the earth. The vertical orientation is expressed in degrees, minutes and seconds. In block **710**, the client requests Vertical information **516** from the example MPT by issuing the following URI conditioned on the If Modified since **418** field:
"http://0000.mpt.an.net10/get_attributes?Location.Rotation.Verticle"
onto the network. The server responds with a header containing a Context-Type **408** of text/x-attribute-list, a version **410** of 1.0, a charset **412** value of US-ASCII, and an element type **414** value of modem-pool-transceiver. If the requested vertical orientation information has changed in the server since the time specified in the If Modified Since field for this information from this client, the server sends a Last Modified field and the new Vertical **516** attribute information in the MIME part response **427** containing the name-attribute name-value field of a Location.Rotation.Horizontal value expressed as + I - dd.mm.ss.f. The vertical orientation ranges from -90 to + 90 degrees.

In block **712**, the client requests location temporal information. The Temporal attribute **518** is the hierarchical data structure root of all the attributes that describe a MPT's time offset. The Temporal attribute **518** specifies the MPT's local time offset relative to Universal Coordinated Time (UTC). The local time offset is expressed in hours, minutes and seconds, with a positive number signifying an added time difference from UTC. In block **712**, the client requests Temporal information **518** from the example MPT by issuing the following URI conditioned on the If Modified since **418** field:
"http://0000.mpt.an.net10/get_attributes?Location.Temporal"
onto the network. The server responds with a header containing a Context-Type **408** of text/x-attribute-list, a version **410** of 1.0, a charset **412** value of us-ascii, and an element type **414** value of modem-pool-transceiver. If the requested temporal information has changed in the server since the time specified in the If Modified Since field for this information from this client, the server sends a Last Modified field and the new Temporal attribute information in the MIME part response **427** containing the name-attribute name-value field of a Location.Temporal value expressed as + I-hh.mm.ss.f. The local time offset ranges from -12 hours to +12 hours.

Location information **502** requests terminate, in block **714,** when the client has finished requesting location information.

FIG. 8 is a flowchart of an exemplary embodiment of the present invention's system parameter update method for all of the Antenna attributes **520** that specify the characteristics of the MPT's antennas: FIG 8. provides a detailed flowchart of the Antenna attribute request **605**. A MPT antenna information query process starts, in block **800**, when a client desires to update antenna information from a MPT server of the wireless communications network.

In block **802**, the client requests antenna transmit information. The Antenna attribute **520** is the hierarchical data structure root of all the attributes that describe the characteristics of the MPT's antenna or set of antennas. The Transmit attribute **522** is an array of the hierarchical root of all attributes that specify the characteristics of the MPT's transmit antennas. Location **540** is the hierarchical root of all the attributes that specify the location of the transmit antenna relative to the location specified in Location **502**. Beamwidth **542** is the beam width of the transmit antenna. The beam width is expressed in degrees. Gain **544** is the gain of the transmit antenna. The transmit antenna gain is expressed in decibels.

Some attributes, such as a MPT Transmit **522**, are most easily expressed as an element of an array. This MIME part format adopts a uniform method for expressing an array as a set of fields. A multi-dimensional array is treated as an array of arrays. Array elements are indexed from 0 using integers. For an attribute array with the attribute-name "X", the number of elements in the attribute array is represented by the attribute-name "X#". For an attribute array with the attribute-name "X", element K of in the attribute array is represented by the attribute-name "X[K]".

If the request contains the attribute name for an attribute array, then the response **420** contains the number of elements in the array and each element in the array, with the number of elements in the array appearing before any of the elements in the array.

In block **802**, the client requests Transmit array information **522** from the example MPT with 1 transmit antenna by issuing the following URL conditioned on the If Modified since **418** field:
"http://0000.mpt.an.net:10/get_attributes?Anteruta.Transmit.Gain&.Antenna.T ransmit.Beamwidth"
onto the network. The server sends a header containing a Context-Type **408** of text/x-attribute-list, a version **410** of 1.0, a charset **412** value of US-ASCII, and an element type **414** value of modem-pool-transceiver. If the requested information has changed in the server since the time specified in the If Modified Since field for this information from this client, the server sends a Last Modified field and the new Antenna Transmit array attribute information in the MIME part response **427** containing the number of elements in the example Antenna.Transmit array expressed as,
Antenna.Transmit#1,
the gain of the transmit antenna expressed as
Antenna.Transmit[0] .Gain:d.f
the beam width of the transmit antenna expressed as
Antenna.Transmit[0]. Beamwidth:d.f,

The beam width ranges from 0 to 360 degrees. The gain ranges from 0 to 100 decibels.

In block **804**, the client requests receive antenna information. The Antenna Receive attribute **524** is an array of the hierarchical data structure root of all the attributes that specify the characteristics of the MPT's receive antenna or set of receive antennas. Location **546** is the hierarchical root of all the attributes that specify the location of the receive antenna relative to the location specified in Location **502**. Beamwidth **548** is the beam width of the receive antenna. The beam width ranges from 0 to 360 degrees. Gain **550** is the gain of the receive antenna. The receive antenna gain is expressed in decibels

In block **804**, the client requests Receive antenna array information **524** from an antenna MPT with one receive antenna by issuing the following URI conditioned on the If Modified since **418** field:
"http://0000.mpt.an.net:10/get_attributes?Antenna.Receive.Gain&Antenna.Re ceive.Beamwidth"
onto the network. The server responds with a header containing a Context-Type **408** of text/x-attribute-list, a version **410** of 1.0, a charset **412** value of US-ASCII and an element type **414** value of modem-pool-transceiver. If the requested information has changed in the server since the time specified in the If Modified Since field for this information from this client, the server returns a Last Modified field and the new Antenna Receive array attribute information in the MIME part response **427** containing the number of elements in the example Antenna.Receive array expressed as
Antenna.Receive#:1
the gain of the receive antenna expressed as
Antenna.Receive[0]. Gain:d.f
the beam width of the receive antenna expressed as
Antenna.Receive[0]. Beamwidth:d.f,

The beam width ranges from 0 to 360 degrees. The gain ranges from 0 to 100 decibels.

Antenna information **520** requests terminate, in block **806**, when the client has finished requesting antenna information.

FIG. 9 is a flowchart of an exemplary of the Neighbor attributes **526** which specify the characteristics of MPT's neighbors. FIG 9. provides a detailed flowchart of the Neighbor attribute request **609**. A MPT neighbor information query process starts, in block **900**, when a client desires to update neighbor information from a MPT server on the wireless communications network.

In block **902**, the client requests neighbor information. Neighbor attribute **526** is an array of the hierarchical root of all attributes that specify characteristics of the MPT's neighbors. Neighbor attribute **526** includes FQDN information and Cost information. FQDN attribute **528** contains the Fully Qualified Domain Name (FQDN) of the neighbor. Cost attribute **530** contains information about use of the neighbor.

Some attributes, such as attributes representing characteristics of a MPT **106** neighbor, are most easily expressed as part of a hierarchy. This MIME type adopts a uniform method for expressing an attribute in a hierarchy as a field. When an attribute within a hierarchy is converted to a field, it is converted to the attribute-name "Y.X", where "X" is the name of the attribute and Y is the attribute-name of the parent of the attribute.

Neighbor attribute **526** information is both an array and a hierarchy. In block **902**, the client requests Neighbor attribute information **526** from an example hierarchy. The example hierarchy contains a wireless communications network **110** with one MPC **108** and three MPTs **106.** The MPC **108** has the FQDN "0000.mpc.an.net". The MPTs **106,** in the example, have the FDQNs "0000.mpt.an.net", "0001.mpt.an.net" and "0002.mpt.an.net". Each MPT **106,** is a neighbor of the other two MPTs **106** and has no routing cost.

The MPT **106** scores neighbor attributes in the array Neighbor attribute **526**. The information stored includes the neighbor's FQDN attribute **528**, and the neighbor's Cost attribute **530**, corresponding to routing cost.

In block **902**, the MPC client 0000.mpc.an.net requests all information about all neighbors of MPT 0000.mpt.an.net by issuing the following URI conditioned on the If Modified since **418** field:
"http://0000.mpt.an.net:10/get_attributes?Neighbor"
onto the network. The server responds with a header containing a Context-Type **408** of text/x-attribute-list, a version **410** of 1.0, a charset **412** value of US-ASCII, and an element type **414** value of modem-pool-transceiver. If the requested information has changed in the servers since the time specified in the If Modified Since field for this information from this client, the servers responds with a Last Modified field and all the new Neighbor array hierarchy information in the MIME part response **427**. Additionally, the body **416** contains the name-attribute name-value fields for the number of neighbors the controller has in the example array expressed as
Neighbor#:2
the FQDN of the first neighbor expressed as
Neighbor[0].FQDN:0001.mpt.an.net
the cost of the first neighbor expressed as
Neighbor[0].Cost:0
the FQDN of the second neighbor expressed as
Neighbor[1].FQDN:0002.mpt.an.net,
and the cost of the second neighbor expressed as
Neighbor[1].Cost:0

Neighbor attribute **526** information requests terminate, in block **904,** when the client has finished requesting neighbor hierarchy information.

FIG. 10 is a flowchart of an exemplary embodiment of the present invention's system parameter update procedure for the attributes that specify the MPC network types from which the MPT network types receive service. FIG 10. provides a detailed flowchart of the Controller attribute **613** request. A controller information query process starts, in block **1000**, when a client desires to update controller information from which a MPT server can receive service.

In block **1002**, the client requests controller information. The Controller attribute **532** is the hierarchical data structure root of the FQDN attributes **534** corresponding to the MPCs a MPT can use.

In block **1002,** the client requests the FQDN attribute **534,** for example from an MPT with 1 MPC. In block **1002,** the client issues the following URL conditioned on the If Modified since **418** field:
"http://0000.mpt.an.net:10/get_attributes?Controller"
onto the network. The server responds with a header containing a Context-Type **408** of text/x-attribute-list, a version **410** of 1.0, a charset **412** value of US-ASCII, and an element type **414** value of modem-pool-transceiver. If the requested information has changed in the server since the time specified in the If Modified Since field for this information from this client, the server sends a Last Modified field and the new Controller array attribute information in the MIME part response 427 containing the number of elements in the example Controller array expressed as Controller#:1, and the domain name expressed as Controller[0].FQDN: 0001.mpc.an.net.

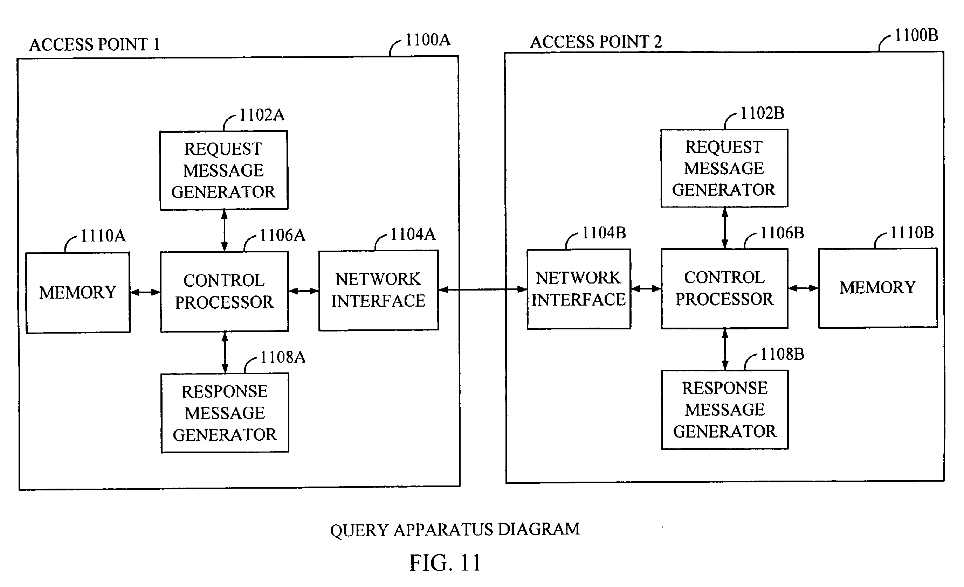

FIG. 11 is a block diagram illustrating the apparatus used to perform the attribute querying operation of the present invention. Access point **1100A** consists of network element and a network interface **1104A**, such as an IP router. Network Interface **1104A** is a device that determines the next network point to which a data packet should be forwarded towards its destination, and connects a network element to an IP network over a variety of bearer services. Network element can be MPT (**10, 106** or **206**), MPC (**14,108** or **200**) or network access server (**18, 104** or **208**). For illustrative purposes only the portion of the network elements that are germane to the attribute querying operation are illustrated in network element.

Network element includes a memory device **1110A** which stores the attributes of network element **1100** wherein the attributes includes a list of FQDNs of other network elements to be queried by the network element. Control processor **1106A** receives a signal from request message generator **1102A** indicative of a need for information from another network element. Control processor **1106A** retrieves a FQDN from memory element **1100A** in response to the signal from request message generator **1102A** and in conjunction with this signal and the FQDN generates a query message. Control processor **1106A** provides the message to network interface **1104A** which routes the message to the appropriate network element **1106B.** Network interface **1104B** directs the request message to network element **1112B**. The request message is provided to control processor **1106B.** In response to the request message, control processor **1106B** retrieves information regarding the requested attributes from memory **1110B.** Response message generator **1108B** provides message packaging information to control processor **1106B.** Control processor **1106B** in response to the information from memory **1110B** and response generator **1108B** generates a response message which it provides to network interface **1104B.** Network interface **1104B** directs the response message to control processor **1106A** in access point **1100A**.

If the attribute information in the response message from element **1100B** is new, then control processor **1106A** updates the information in memory element **1110A**. It will be understood by one skilled in the art that the reciprocal operation of querying can be performed from network element of network element by simply reversing the A's and B's.

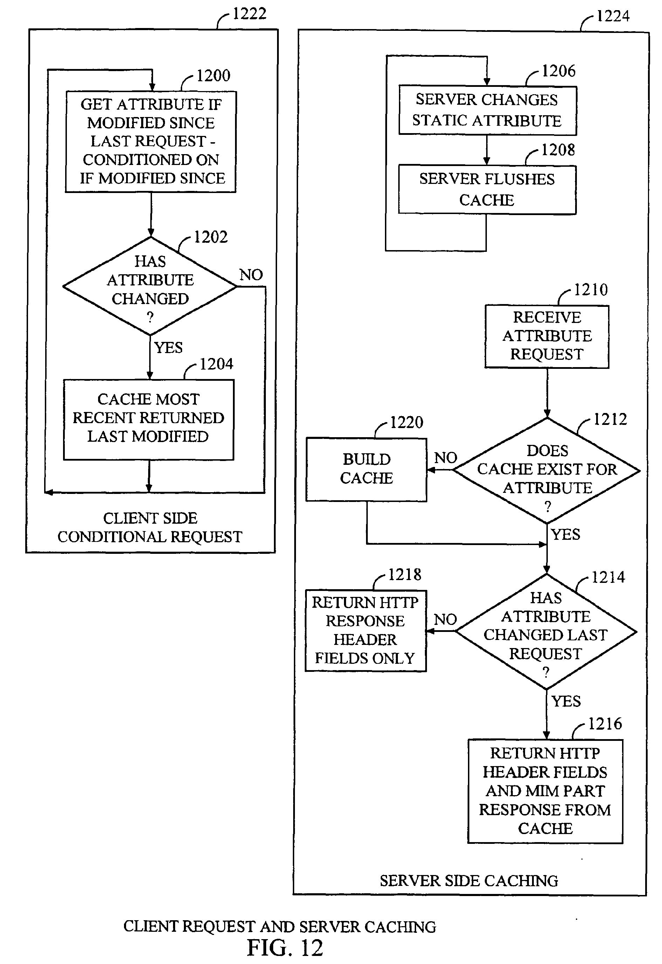

FIG. 12 is a flowchart of an exemplary embodiment of the present invention's method for requesting and caching attribute information to reduce processing and network traffic. The client request and server caching method illustrated in FIG. 12 allows the client to request only send information if the information has changed, and prevents the server from repeatedly generating and returning the same response.

Block **1222**, illustrates the client side conditional request. In HTTP, the GET method can be conditioned on several different criteria. This allows the client to request that the server only send information if the information has changed. Of particular use in this query protocol is the If-Modified-Since condition. Use of the If-Modified-Since condition reduces network traffic and client processing. In block **1200** the client uses a GET method conditioned on the If-Modified-Since field to request attribute information. In block **1202**, the client determines if the server has responded with updated MIME part **427** attribute information. If the server responds with updated MIME part **427** information, in block **1204**, the client caches the most recent Last-Modified field **425** of the response for each different query to each server for use in future queries. When the client repeats a query to a server block **1200**, the client sets the If-Modified-Since field **421** to the value of the returned Last-Modified field **425**.

Block **1224** illustrates the server side caching method of the present invention. In many instances, protocols using this query protocol will use queries that are always the same. In addition, in many instances, protocols using this query protocol will query for attributes that change infrequently, known as static attributes. As a result, current servers repeatedly generate and return the same response. By caching query responses that contain only static attributes, the present invention reduces server processing. In the present invention, the server tags certain attributes as "static". Attributes tagged as "static" should be attributes that change infrequently. For example, attributes that are hard coded (such as protocol revisions) and attributes that only change during network build-out and optimization (such as neighbor lists) are good candidates for being tagged as "static". On the other hand, attributes that change as a function of loading (such as available bandwidth) are bad candidates for being tagged as "static". In block **1206** the server changes a static attribute. In block **1208**, the server flushes all cached responses whenever one of the attributes tagged as "static" is modified. This will flush some cached pages unnecessarily. However, since "static" attributes change infrequently by definition, the impact of the unnecessary cache flushing is minimal. The server ensures that the cache is flushed when any attribute in the query has been modified. The server gets much of the benefits of caching using a simple conservative cache flushing algorithm.

In block **1210**, the server receives an attribute query from a client. In block **1212** the server determines if a cache exists for the queried information. If the cache had previously been flushed due to attribute change, the server builds a new cache in block **1220**, and control proceeds to block **1214**. Otherwise, control proceeds directly to block **1214**.

In block **1214**, the server determines if the requested information has changed since the last such request using the If Modified Since field **421** of the query. If the information has not changed, only the HTTP response header **426** is returned, as illustrated by block **1218.** If the requested information has been modified since the time specified in the If Modified Since field, then in block **1216** the server returns the HTTP response header **426** and the MIME part **427** response from the cache.

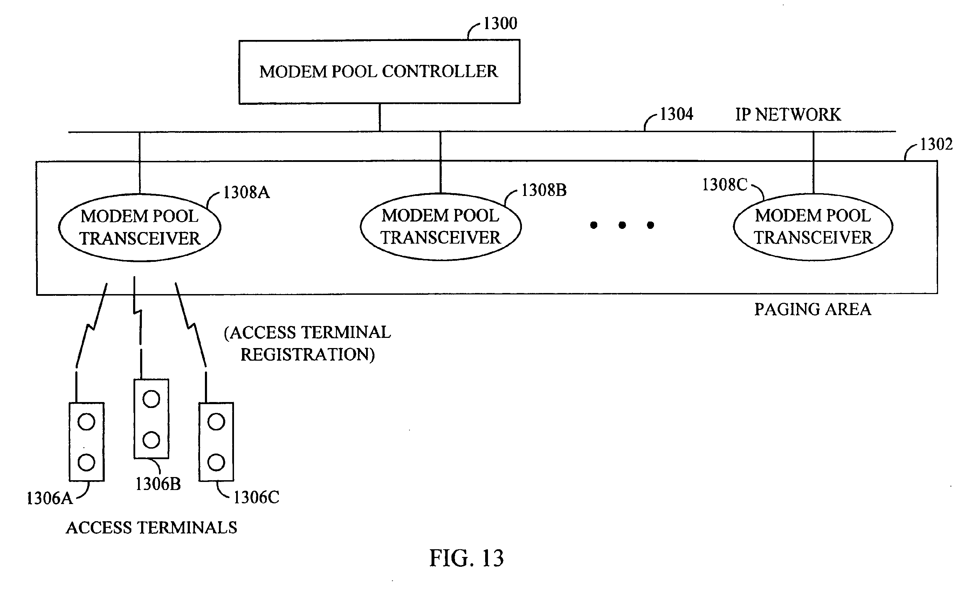

FIG. 13 is a block diagram illustrating the apparatus used to perform Paging Information Discovery with the Access Network Paging Information Protocol. The Access Network Paging Information Protocol allows an MPC **1300** to dynamically determine the paging area **1302** of ATs **1306A, 1306B, 1306C** the MPC **1300** controls.

When an AT is dormant, or has an active session and no active connection, the AT **1306** provides the Access Network with regular location updates. There are several triggers that cause an AT **1306** to provide the Access Network with a location update.

MPC element **1300** provides service to a collection of one or more MPT elements **1308** over IP Network **1304**. An AT **1306** updates, or registers, its location with MPC **1300** by sending its location information to the MPT **1308** in which it is located. The MPT **1308** forwards the location information to the MPC **1300** over the IP Network **1304**. The MPC **1300** locates the AT **1306** by paging AT **1306** in all the MPTs **1302** in which AT **1306** might be located. The collection of MPTs **1302** where an AT could be located is the AT's paging area **1302**.

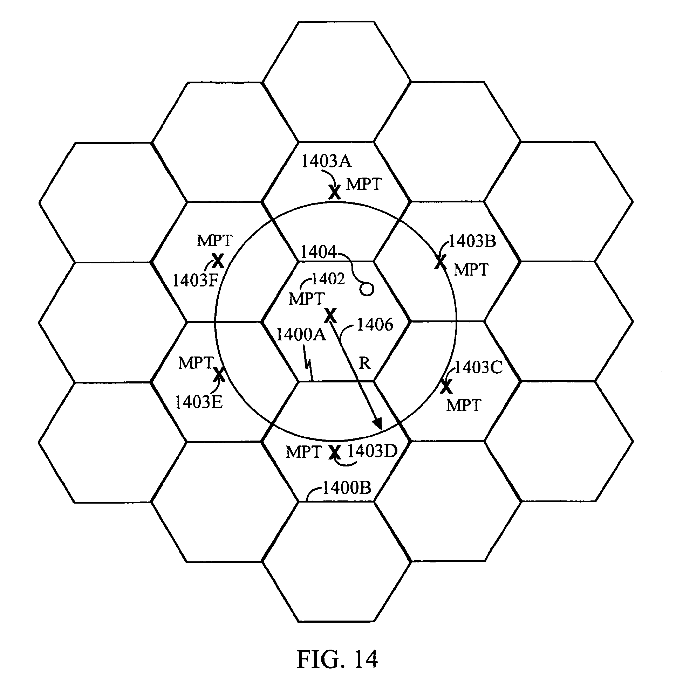

FIG. 14 illustrates an AT paging area. In one embodiment, a protocol for MPCs to determine paging areas without the intervention of a central network manager is provided. The paging area is determined by AT **1404** location update procedures known as registration. AT **1404** movement through the Access Network may require location registration with MPCs based on different criteria including distance **1406** and zone **1400A** or both, depending on what types of location registration are enabled in the AT **1404.** A registration area corresponds to the reported MPT **1402** of the location update, plus all other MPTs to which the AT **1404** could move without registering again because no distance or boundary zone has been crossed. In other words, the registration area is the area in which the AT **1404** can be located without the need to re-register. This area is determined by the registration distance and registration zone. If an AT is within registration distance from the last AT in which the AT registered and is within the same registration zone, then the AT is in the same registration area.

A paging area is a list of MPTs **1402, 1403** in which an AT may be located at any given time. The list comprises the MPTs **1402** located in the registration area of the AT, and all of their neighbors **1403**. The neighbors **1403** of the MPTs **1402** in the registration area are included in the paging area to account for the fact that it takes an AT a non-zero time to detect that a location update must be performed, and to perform the location update. In other words, the AT may have crossed into a neighboring MPT before a location update has occurred at the MPC.

If zone-based registration is enabled at the AT **1404**, the AT **1404** must perform a location update if the AT **1401** crosses from one zone **1400a** to an adjacent zone **1400b**. If distance-based registration is enabled at the AT **1404**, the AT **1404** must perform a location update if the AT **1404** moves farther than distance R **1406** since its last location update. The paging area created is the MPT **1402** where the AT **1404** last reported itself to be located and one ring of neighboring MPTs **1403** around the MPT **1402**.

Paging areas depend on the values of the distance and zone location update triggers. While the values of these triggers can differ between MPTs, they are independent of the AT. Registration distances **1406** and zones **1400** are configured by the service provider operator for each MPT to balance the amount of registration traffic against the amount of paging traffic on the network. The paging discovery protocol and paging area algorithm of the presently described embodiments determine where to page an AT moving through the access network based on the configured information and the last registered location.

Each MPT has its own paging area. A sector may have one or more MPTs. If a sector has more than one MPT, the MPTs are communicating to ATs on different frequencies. A neighboring MPT in an adjacent sector is known as a horizontal neighbor. A neighboring MPT in the same sector operating on a different frequency is known as a vertical neighbor.

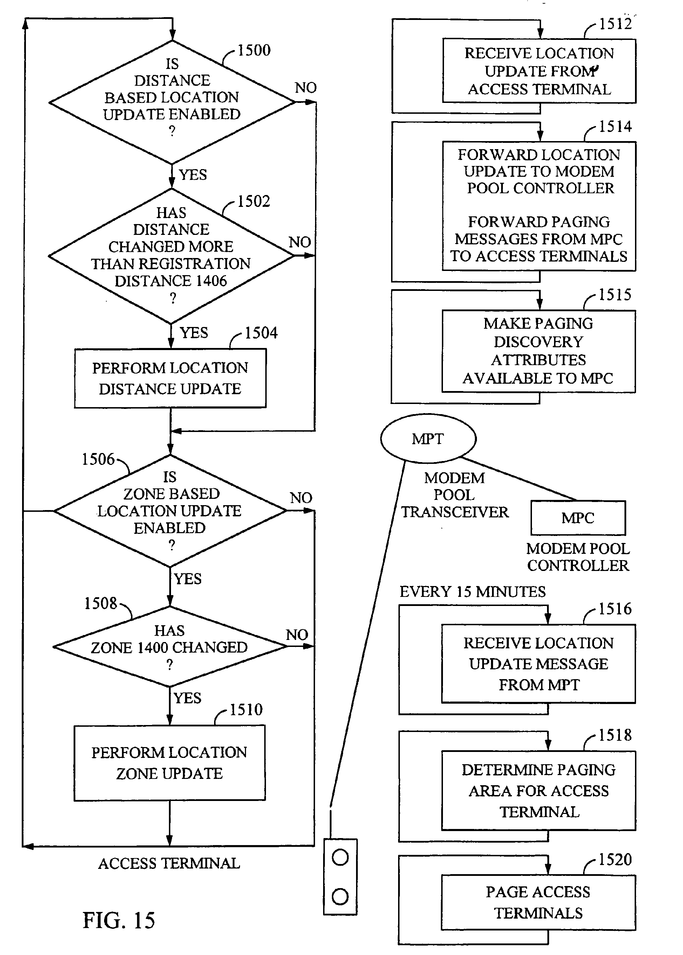

FIG. 15 is a high level block diagram of a method in accordance with one embodiment for performing Paging Information Discovery in a wireless communications system.

Distance and zone update triggers allow the Access Network to reduce the paging area for an AT.

If distance-based location update is enabled, then the AT will perform a location update after moving greater than the location update distance since the AT last performed a location update. If zone-based location update is enabled, then the AT will perform a location update after moving into a location update zone different from the location update zone in which the AT last performed a location update.

Blocks **1500-1510** illustrate the paging functionality of the AT. In block **1500**, the AT determines if its distance-based location update is enabled. If distance-based location update is enabled, in block **1502** the AT determines if its distance has changed more than its configured registration distance. Otherwise, control proceeds directly to block **1506**. If in block **1502** the AT determined its distance had changed more than the distance trigger, in block **1504** the AT performs a location distance update and control moves to block **1506**. If no distance update is necessary in block **1504**, control moves to block **1506**.

In block **1506**, the AT determines if its zone-based location update is enabled. If zone-based location update is enabled, in block **1508** the AT determines if the AT has moved into a location update zone different from the location update zone in which the AT last performed a location update. If zone-based location update is not enabled, AT processing terminates until the next update interval. If in block **1508**, the AT determined its zone had changed, in block **1510** the AT performs a location zone update and AT processing terminates until the next update interval. If no zone update is necessary in block **1510**, AT processing terminates until the next update interval. Update intervals are determined by a state machine that executes every time the AT moves into the coverage of a new MPT.

When an AT performs a location update, the location update is forwarded to the MPC that is providing the AT service. If the MPC does not provide service to the MPT that received the location update, then one of two things will happen. If the AN does support MPC handoff, then the AT will be handed off to an MPC that does provide service to the MPT that received the location update. If the Access Network does not support MPC handoff, then the session will be terminated and the AT will need to establish a new session. The new session will be established with an MPC that does provide service to the MPT that received the location update. As a result, the number of paging areas that a particular MPC must have knowledge of and maintain information for can be reduced.

Blocks **1512-1514** illustrate the individual paging functionality tasks of the MPT. The MPT receives location updates from ATs in task block **1512.** In task block **1514,** the MPT forwards the location updates to the MPC servicing the MPT, and forwards paging messages received from the MPC to ATs. The MPT responds to paging discovery attribute queries from the MPC in task block **1515**.

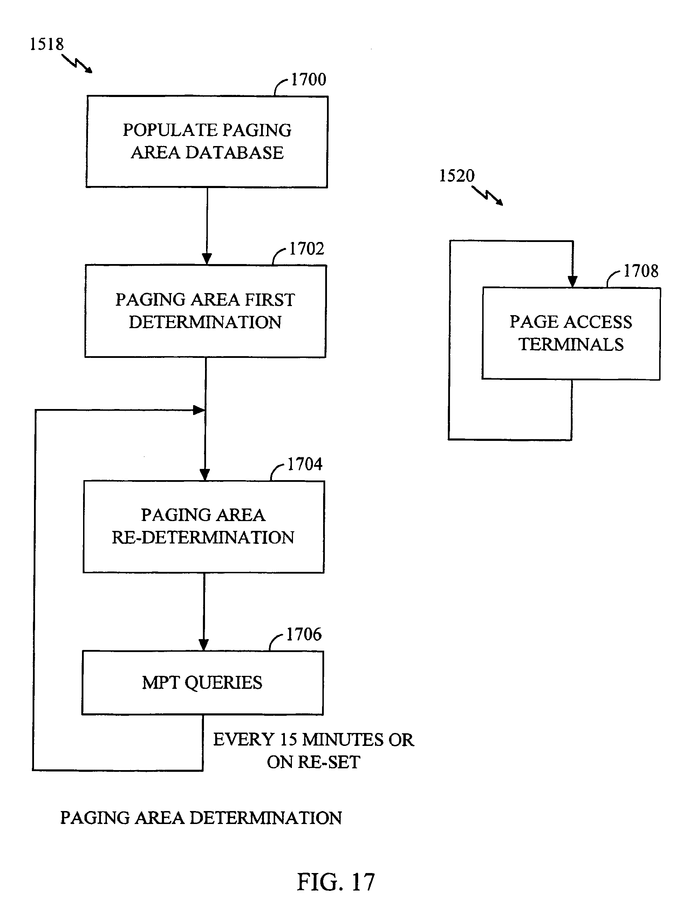

Blocks **1516-1520** illustrate the individual paging functionality tasks of the MPC. In task block **1516**, the MPC receives AT location updates forwarded by the MPT and uses the information to determine updated paging areas for the AT in task block **1518**. The MPC sends paging messages to dormant ATs in task block **1520**. The paging area determination and AT paging functionality of the MPC are described in detail with reference to FIG 17.

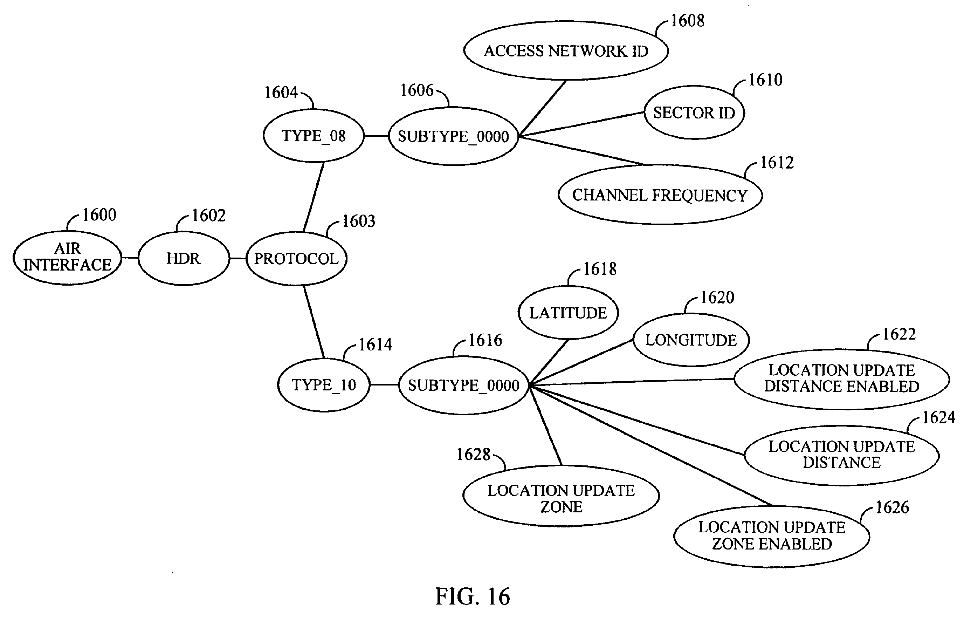

FIG. 16 is a data tree diagram of an exemplary embodiment of a partial data hierarchy of the present invention, illustrating paging information discovery attributes which are an extension of the Air Interface **536** root. It will be understood by one skilled in the art that the hierarchy is presented for illustrative purposes and does not include all attributes necessary. In addition, other structures may be employed and are within the scope of the presentation.

AirInterface **1600** is the hierarchical root of all air interface attributes.

HDR **1602** is the hierarchical root of all HDR air interface attributes.

Protocol **1603** is the hierarchical root of all HDR air interface attributes organized by protocol type and protocol subtype.

Type_08 **1604** is the hierarchical root of all HDR air interface attributes associated with HDR protocol type 8, the Overhead Protocol.

SubType_0000 **1606** is the hierarchical root of all HDR air interface attributes associated with HDR protocol type 8, the Route Update Protocol and protocol subtype 0, the Default Overhead Protocol.

AccessNetworkID **1608** specifies the Access Network to which the MPT belongs.

SectorID **1610** specifies the Sector to which the MPT belongs.

ChannelFrequency **1612** specifies the channel frequency of the MPT.

Type_10 **1614** is the hierarchical root of all HDR air interface attributes associated with HDR protocol type 10, the Route Update Protocol.

SubType_0000 **1616** is the hierarchical root of all HDR air interface attributes associated with HDR protocol type 0x10, the Route Update Protocol and protocol subtype 0, the Default Route Update Protocol.

Latitude **1618** specifies the AT's latitude. This attribute is equivalent to the attribute Location.Translation.Latitude **506**.

Longitude **1620** specifies the AT's longitude. This attribute is equivalent to the attribute Location.Translation.Longitude **510**.

LocationUpdateDistanceEnabled **1622** is a boolean attribute that indicates whether or not distance-based location update is enabled.

LocationUpdateDistance **1624** is the location update distance.

LocationUpdateZoneEnabled **1626** is a boolean that indicates whether or not zone based location update is enabled.

LocationUpdateZone **1626** is the location update zone.

FIG. 17 is a block diagram illustrating a paging area determination and AT paging method in accordance with one embodiment.

Paging area determination and AT paging are MPC functions. Each MPC builds a database containing the paging area of each AT to which the MPC is providing service.

A straightforward implementation of the database might have one paging area entry per AT. Since an MPC may serve as many as one thousand ATs per MPT, this implementation could result in a very large database. In addition, since mobile ATs move frequently, this implementation could result in a large number of database updates. However, the present embodiment implements the database in a more efficient way.

Paging areas depend on the values of the distance and zone location update triggers. While the values of these triggers can differ between MPTs, the values are independent of the AT. Therefore, the paging area database of the present embodiment has one paging area entry per MPT rather than one paging area entry per AT. Since multiple ATs are likely to be located in the same MPT, having one entry per MPT reduces the size of the database.

When an AT performs a location update, the location update is forwarded to the MPC that is providing the AT service. If this MPC does not provide service to the MPT that received the location update, the present embodiment will provide one of two responses. If the Access Network does support MPC handoff, then the AT will be handed off to an MPC that does provide service to the MPT that received the location update. If the Access Network does not support MPC handoff, then the session will be terminated and the AT will need to establish a new session. The new session will be established with an MPC that does provide service to the MPT that received the location update. As a result, the present embodiment further simplifies the paging area database.

Since an MPC will either hand off or release ATs that perform location updates in MPTs that the MPC does not serve, the database of the present embodiment need only contain a paging area entry for each MPT to which the database provides service. In the case where the MPCs are located within the Access Points, the database of the present embodiment will contain entries only for MPTs that are in the same Access Point.

The MPC performs initial population of its database in block **1700**. In order to populate the paging area database, each MPC uses the algorithm of the present embodiment to determine the paging area for each MPT to which it provides service. The present embodiment discovers paging area changes every twenty minutes by causing the MPC to re-determine the paging area for each MPT to which it provides service every fifteen minutes. In addition, the MPC re-determines the paging area whenever the MPC is reset, such as after a firmware upgrade or a power outage. Finally, the present embodiment allows the MPC to re-determine the paging area on command from the operator.

The first determination of the paging area is performed in block **1702**. When first determining the paging area for an MPT, the MPC does the following.

Starting at the root MPT, the MPC recursively follows the neighbor list until one of the stopping criteria is met. The root MPT is the MPT for which the MPC is determining the paging area. If distance-based location update is enabled on the root MPT, then the recursion stops when the distance between the root MPT and the queried MPT exceeds the location update distance of the root MPT. If zone-based location update is enabled on the root MPT, then the recursion stops when the zone of the queried MPT is different than the zone of the root MPT. The MPT paging area is the list of all MPTs that were queried.

The paging area includes all the MPTs in which an AT would not perform a location update if the AT had performed a location update in the root MPT. In addition, the paging area includes the neighbors of the aforementioned MPTs. The neighbors are included in order to account for the fact that it takes an AT a non-zero time to detect that a location update must be performed and to perform the location update.

The algorithm of the present embodiment prunes the MPTs in which an AT is paged based on location update area. However, the algorithm does not prune MPTs in which an AT is paged based on AT Identifier. An Access Node of the Access Network is a single-coverage, single-frequency point of connection to an Access Network. An Access Node is the basic building block of the Access Network. The Access Node is identified by its sector (SectorId) **1610** and its carrier frequency (ChannelFrequency). A sector of the Access Network is a collection of one or more channels with the same geographical coverage area and SectorID **1610**.

When an Access Port contains multiple Access Nodes, a page message for a particular AT need be sent only to the Access Node to which the AT will hash, or successfully match an AT page message address key to the Access Node. Hashing is the transformation of an AT address into a (usually shorter) fixed-length value, or key, that represents the original address. Hashing is used to index and retrieve items in a database because it is faster to find the item using the shorter, hashed key than to find it using the original value.

The algorithm could further reduce the MPT paging list by eliminating all Access Nodes in an Access Port to which the AT will not hash, or achieve an address key match. However, the present embodiment does not reduce the MPT paging list by eliminating all Access Nodes in an Access Port to which the AT will not hash for the following reason. If an Access Node within an Access Port fails, some ATs covered by the Access Port will hash to different Access Nodes. If the Access Node paging list had been pruned to include only the Access Nodes to which the AT had originally hashed, then the Access Node paging list would need to be updated whenever such an Access Node failure occurred. The service outage resulting from such Access Node failures is coupled to the MPT paging list update rate. As a result, pruning the Access Node paging list to include only the Access Nodes to which the AT hashes would undesirably increase the MPT paging list update rate.

After first determining a paging area, the MPC regularly re-determines the paging area in block **1704**. Re-determination is the same as first determination **1702**, with one exception. In first determination, if a queried MPT does not respond, then the recursion through that MPT stops. However, in re-determination, if a queried MPT does not respond, then the recursion assumes that the configuration is unchanged since the last query and continues. This makes the protocol tolerant of temporary MPT outages. Because the present embodiment is tolerant of outages, lists do not have to be adjusted in every MPT for each occurrence of a temporary outage. The lists dynamically configure themselves, with each cell performing paging information discovery for itself. The present embodiment eliminates the need for paging areas to be reconfigured by a central manager in the event of temporary cell outages. This feature of the present embodiment eliminates paging area information propagation errors and system failures caused by paging failures. Additionally, if carriers change registration distances or zones the lists do not have to be manually changed by a central network manager. Instead, the present embodiment provides a method to automatically update the paging areas using the Paging Information Discovery and Access Network Attribute Query Protocols.

Paging area first determination and re-determination requires the MPC to query MPTs for information illustrated in block **1706**. The MPC performs the queries using the Access Network Attribute Query Protocol. The MPC queries the MPT with IF Modified Since conditioned HTTP get requests **418** for the following parameters: "Neighbor.FQDN" **528,** "AirInterface.HDR.Protocol.Type_08.Subtype_0000" **1606,** and "AirInterface.HDR.Protocol.Type_10.Subtype_0000" **1616.**

The MPC may not need all these attributes from a specific MPT. However, rather than creating different queries for the specific attributes that the MPC needs from each MPT, a single query that is the union of all the attributes is created by the protocol of the present embodiment. This is done so that each MPT will receive the same query from every MPC. Therefore, the MPT will only need to cache one query response. However, the MPC will need to discard the attributes that it does not need.

The MPC uses the attributes "AirInterface.HDR.Protocol.Type_08.Subtype_0000.AccessNetworkID" **1608**, "AirInterface.HDR.Protocol.Type_08.Subtype_0000.SectorID" **1610**, and "AirInterface.HDR.Protocol.Type_08.Subtype_0000.ChanneFrequency" **1612**, from the query response.

If the queried MPT is the root MPT, then the MPC uses the additional attributes, "AirInterface.HDR.Protocol.Type_10.Subtype_0000.Latitude" **1618,** "AirInterface.HDR.Protocol.Type_10.Subtype_0000.Longitude" **1620,** "AirInterface.HDR.Protocol.Type_10.Subtype_0000.LocationUpdateDistanceEn abled" **1622,** "AirInterface.HDR.Protocol.Type_10.Subtype_0000.LocationUpdateDistance" **1624**,
"AirInterface.HDR.Protocol.Type_10.Subtype_0000.LocationUpdateZoneEnabl ed" **1626**, and "AirInterface.HDR.Protocol.Type_10.Subtype_0000.LocationUpdateZone 1628" from the query response **420**.

If distance-based location update is enabled on the root MPT, then the MPC uses the additional attributes "AirInterface.HDR.Protocol.Type_10.Subtype_0000.Latitude" **1618,** and "AirInterface.HDR.Protocol.Type_10.Subtype_0000.Longitude" **1620** from the query response **420**.

If zone-based location update is enabled on the root MPT, then the MPC uses the additional attribute "AirInterface.HDR.Protocol.Type_10.Subtype_0000.LocationUpdateZone" **1628** from the query response **420**.

In block **1708**, the MPCs page ATs receiving service from the MPCs using the paging protocol of the present embodiment. When paging an AT, the MPC sends a page message to one or more MPTs.

Each page message transmitted by the MPC includes the identifier for the AT being paged. This allows an MPT to discard page messages based on whether or not the AT will hash to the MPTs Access Nodes.

The MPC sends a copy of the page message to each MPT in the page area. The IP address used by the MPT for its paging resource may be a unicast, multicast or broadcast address.

The IP address of the MPT's paging resource is allowed to be a multicast and broadcast address in order to reduce the number of page message copies that an MPC must send, thus reducing paging traffic on the Access Network.

If either distance-based or zone-based location update is enabled, the paging message includes a unique over-the-air identifier comprising the AccessNetworkID **1608** and SectorID **1610** for each MPT in the paging area. This allows an MPT to discard page messages that the MPT is not responsible for transmitting.

## Claims

1. A method for determining cellular paging areas of a wireless communication network, comprising:
initially populating (1700) a paging area data base by starting at a root Modem Pool Transceiver, abbreviated as MPT (1402);
sending inquiries, directly to the neighbors (1403) of the root MPT (1402), inquiring as to a neighbor list contained in each of the root MPT's neighbors (1403);
receiving the neighbor list contained in each of the root MPT's neighbors (1403);
recursively following neighbor lists of the root MPT's neighbors (1403), which respond to the root MPT (1402), in order to initially populate the paging area data base with the neighbors of the root MPT;
terminating the recursive following of the neighbors lists of the root MPT's neighbors (1403) upon satisfaction of a stop criteria; and
periodically redetermining (1704) the paging area.

2. The method of claim 1 further comprising:
terminating the recursive following of neighbor lists of MPTs, which respond to the root MPT (1402), when distance based location update is enabled on the root MPT (1402) and a queried MPT exceeds the location update distance of the root MPT (1402).

3. The method of claim 1 further comprising:
terminating the recursive following of neighbor lists of MPTs, which respond to the root MPT (1402) when zone based location update is enabled on the root MPT (1402) and a queried MPT is in a different zone than the root MPT (1402).

4. The method of claim 1 wherein periodically redetermining the paging area includes assuming, if a MPT does not respond, that the configuration is unchanged since the last query.

5. An apparatus for determining cellular paging areas of a wireless communication network, comprising:
a root MPT having a memory containing a paging area data base;
a request message generator for sending inquiries, directly to the neighbors (1403) of the root MPT (1402), inquiring as to a neighbor list contained in each of the root MPT's neighbors (1403);
a network interface for receiving neighbor lists contained in each of the root MPT's neighbors (1403);
a control processor for recursively following neighbor lists of MPTs, which respond to the root MPT (1402), in order to initially populate the paging area data base with the neighbors of the root MPT (1402), and for terminating recursively following neighbor lists of MPT's when a stop criteria is satisfied; and
a program within the control processor for periodically redetermining the paging area.

6. The apparatus of claim 5 wherein the control processor terminates the recursive following of neighbor lists of MPTs, which respond to the root MPT (1402), when distance based location update is enabled on the root MPT and a queried MPT exceeds the location update distance of the root MPT (1402).

7. The apparatus of claim 5 further comprising wherein the control processor terminates the recursive following of neighbor lists of MPTs, which respond to the root MPT (1402) when zone based location update is enabled on the root MPT and a queried MPT is in a different zone than the root MPT (1402).

8. The apparatus of claim 5 wherein the control processor periodically redetermines the paging area and assumes, if a MPT does not respond, that the configuration is unchanged since the last query.

## Patentansprüche

1. Ein Verfahren zum Bestimmen von zellularen Paging- bzw. Funkrufbereichen eines drahtlosen Kommunikationsnetzwerks, wobei das Verfahren Folgendes aufweist:
anfängliches Bevölkern bzw. Füllen (1700) einer Pagingbereichsdatenbank, und zwar beginnend mit einem Route- bzw. Stammmodem-Pool-Transceiver abgekürzt als MPT (1402);
Senden von Anfragen direkt an die Nachbarn (1403) des Stamm-MPTs (1402), um hinsichtlich einer Nachbarliste, enthalten in einem jeden der Nachbarn (1403) des Stamm-MPTs, nachzufragen;
Empfangen der Nachbarliste enthalten in einem jeden der Nachbarn (1403) des Stamm-MPTs;
rekursives Folgen von Nachbarlisten der Nachbarn (1403) des Stamm-MPTs, die auf das Stamm-MPT (1402) antworten, und zwar um die Pagingbereichsdatenbank anfänglich mit den Nachbarn des Stamm-MPTs zu füllen bzw. zu belegen;
Beenden des rekursiven Folgens der Nachbarlisten der Nachbarn (1403) des Stamm-MPTs bei Erfüllung eines Stoppkriteriums; und
periodisches Neubestimmen (1704) des Pagingbereichs.

2. Verfahren nach Anspruch 1, das weiterhin Folgendes aufweist:
Beenden des rekursiven Folgens der Nachbarlisten von MPTs, die auf das Stamm-MPT (1402) antworten, wenn distanzbasierte Ortsaktualisierung beim Stamm-MPT (1402) aktiviert ist und ein abgefragtes MPT die Ortsaktualisierungsdistanz des Stamm-MPTs (1402) überschreitet.

3. Verfahren nach Anspruch 1, das weiterhin Folgendes aufweist:
Beenden des rekursiven Folgens von Nachbarlisten der MPTs, die auf das Stamm-MPT (1402) antworten, wenn zonenbasierte Ortsaktualisierung in dem Stamm-MPT (1402) aktiviert ist und ein abgefragtes MPT sich in einer unterschiedlichen Zone befindet als das Stamm-MPT (1402).

4. Ein Verfahren nach Anspruch 1, wobei das periodische Neubestimmen des Pagingbereichs beinhaltet, dass angenommen wird, dass die Konfiguration unverändert ist, seit der letzten Abfrage, wenn das MPT nicht antwortet.

5. Eine Vorrichtung zum Bestimmen von zellularen Pagingbereichen eines drahtlosen Kommunikationsnetzwerks, wobei die Vorrichtung Folgendes aufweist:
ein Stamm-MPT mit einem Speicher, der eine Pagingbereichsdatenbank enthält;
einen Anfragenachrichtengenerator zum Senden von Anfragen direkt zu den Nachbarn (1403) des Stamm-MPTs (1402),
Nachfragen hinsichtlich einer Nachbarliste, die in jedem der Nachbarn (1403) desStamm-MPTs enthalten ist;
ein Netzwerkinterface zum Empfangen von Nachbarlisten, enthalten in jedem der Nachbarn (1403) des Stamm-MPTs;
einen Steuerprozessor zum rekursiven Folgen von Nachbarlisten der MPTs, die auf das Stamm-MPT (1402) antworten, und zwar um anfänglich die Pagingbereichsdatenbank mit den Nachbarn des Stamm-MPTs (1402) zu bevölkern bzw. zu belegen und zum Beenden des rekursiven Folgens der Nachbarlisten von MPTs, wenn ein Stoppkriterium erfüllt ist;
ein Programm innerhalb des Steuerprozessors zum periodischen Neubestimmen des Pagingbereichs.

6. Vorrichtung gemäß Anspruch 5, wobei der Steuerprozessor das rekursive Folgen von Nachbarlisten der MPTs, die auf das Stamm-MPT (1402) antworten, beendet, wenn distanzbasiertes Ortsaktualisieren auf dem Stamm-MPT aktiviert ist und ein abgefragtes MPT die Ortsaktualisierungsdistanz des Stamm-MPTs (1402) überschreitet.

7. Vorrichtung nach Anspruch 5, die weiterhin aufweist, dass der Steuerprozessor das rekursive Folgen von Nachbarlisten von MPTs, die auf das Stamm-MPT (1402) antworten, beendet, wenn zonenbasiertes Ortsaktualisieren auf dem Stamm-MPT aktiviert ist und ein abgefragtes MPT sich in einer unterschiedlichen Zone als das Stamm-MPT (1402) befindet.

8. Vorrichtung nach Anspruch 5, wobei der Steuerprozessor periodisch den Pagingbereich neu bestimmt und annimmt, dass die Konfiguration seit der letzten Anfrage unverändert ist, wenn ein MPT nicht antwortet.

## Revendications

1. Procédé de détermination de zones de téléavertissement cellulaire d'un réseau de communication sans fil, comprenant :
remplir initialement (1700) une base de données de zones de téléavertissement en partant d'un émetteur-récepteur de base à groupe de modem, appelé MPT (1402) ;
envoyer des requêtes, directement aux voisins (1403) du MPT de base (1402), en demandant une liste de voisins contenue dans chacun des voisins (1403) du MPT de base ;
recevoir la liste de voisins contenue dans chacun des voisins (1403) du MPT de base ;
suivre de façon récursive les listes de voisins des voisins (1403) du MPT de base qui répondent au MPT de base (1402) pour remplir initialement la base de données de zones de téléavertissement par des voisins du MPT de base ;
terminer le suivi récursif des listes de voisins des voisins du MPT de base (1403) jusqu'à satisfaction d'un critère d'arrêt ; et
redéterminer périodiquement (1704) la zone de téléavertissement.

2. Procédé selon la revendication 1, comprenant en outre :
interrompre le suivi récursif des listes de voisins des MPT qui répondent au MPT de base (1402) quand la mise à jour d'emplacement basée sur la distance est validée sur le MPT de base (1402) et qu'un MPT requis dépasse la distance de mise à jour d'emplacement du MPT de base (1402).

3. Procédé selon la revendication 1, comprenant en outre :
interrompre le suivi récursif des listes de voisins des MPT qui répondent au MPT de base (1402) quand la mise à jour d'emplacement basée sur la zone est validée sur le MPT de base (1402) et qu'un MPT requis est dans une zone différente de celle du MPT de base (1402).

4. Procédé selon la revendication 1, dans lequel la redétermination périodique de la zone de téléavertissement comprend l'étape consistant à supposer, si un MPT ne répond pas, que la configuration est inchangée depuis la dernière requête.

5. Dispositif pour déterminer des zones de téléavertissement cellulaires d'un réseau de communication sans fil comprenant :
un MPT de base ayant une mémoire contenant une base de données de zones de téléavertissement ;
un générateur de message de requête pour envoyer des requêtes directement aux voisins (1403) du MPT de base (1402), requérant une liste de voisins contenue dans chacun des voisins (1403) du MPT de base ;
une interface de réseau pour recevoir une liste de voisins contenue dans chacun des voisins (1403) du MPT de base ;
un processeur de commande pour suivre de façon récursive les listes de voisins des MPT, qui répondent au MPT de base (1402), pour remplir initialement la base de données de zones de téléavertissement par les voisins du MPT de base (1402) et pour interrompre de façon récursive les listes de voisins suivantes des MPT quand un critère d'arrêt est satisfait ; et
un programme dans le processeur de commande pour redéterminer périodiquement la zone de téléavertissement.

6. Dispositif selon la revendication 5, dans lequel le processeur de commande interrompt le suivi récursif des listes de voisins des MPT qui répondent au MPT de base (1402) quand une mise à jour d'emplacement basée sur la distance est validée sur le MPT de base (1402) et qu'un MPT requis dépasse la distance de mise à jour d'emplacement du MPT de base (1402).

7. Dispositif selon la revendication 5, dans lequel le processeur de commande interrompt le suivi récursif des listes de voisins des MPT qui répondent au MPT de base (1402) quand la mise à jour d'emplacement basée sur la zone est validée sur le MPT de base (1402) et qu'un MPT requis est dans une zone différente de celle du MPT de base (1402).

8. Dispositif selon la revendication 1, dans lequel le processeur de commande redétermine périodiquement la zone de téléavertissement et suppose, si un MPT ne répond pas, que la configuration est inchangée depuis la dernière requête.
